## Europäisches Patentamt

## European Patent Office

## Office européen des brevets

(19)

(11) Veröffentlichungsnummer: **0 149 448**
**B1**

(12) **EUROPÄISCHE PATENTSCHRIFT**

(45) Veröffentlichungstag der Patentschrift: **07.11.90**

(21) Anmeldenummer: **84890249.0**

(22) Anmeldetag: **18.12.84**

(51) Int. Cl.⁵: **H 01 M 10/04**, H 01 M 10/38,
H 01 M 8/24, H 01 M 2/40

(54) Galvanisches Element, insbesondere Sekundärelement und Verfahren zur Herstellung desselben.

(30) Priorität: **19.12.83 AT 4426/83**

(43) Veröffentlichungstag der Anmeldung:
**24.07.85 Patentblatt 85/30**

(45) Bekanntmachung des Hinweises auf die
Patenterteilung:
**07.11.90 Patentblatt 90/45**

(84) Benannte Vertragsstaaten:
**AT BE CH DE FR GB IT LI LU NL SE**

(56) Entgegenhaltungen:
FR-A-2 436 508
US-A-4 125 680
US-A-4 346 150

IEEE TRANSACTIONS ON VEHICULAR
TECHNOLOGY, Band VT-32, Nr. 1, Februar 1983,
Seiten 26-32, IEEE, New York, US; R.J.
BELLOWS et al.: "Zinc-bromine battery design
for electric vehicles"

(73) Patentinhaber: **S.E.A. Studiengesellschaft für
Energiespeicher und Antriebssysteme
Gesellschaft m.b.H.
Bleckmanngasse 10 Postfach 49
A-8680 Mürzzuschlag (AT)**

(72) Erfinder: **Tomazic, Gerd, Dr.
Hofkirchergasse 4
A-8680 Mürzzuschlag (AT)**

(74) Vertreter: **Widtmann, Georg, Dr.
S.E.A. Studiengesellschaft für Energiespeicher
und Antriebssysteme Gesellschaft m.b.H.
Postfach 49 Bleckmanngasse 10
A-8680 Mürzzuschlag (AT)**

**Beschreibung**

Die Erfindung bezieht sich auf ein galvanisches Element, insbesondere Sekundärelement, mit umlaufender Elektrolytflüssigkeit, Elektrolytsuspension od. dgl., z.B. eine Zink-Brom-Batterie sowie auf ein Verfahren zur Herstellung desselben.

Bei galvanischen Elementen mit umlaufenden Elektrolyten besteht der Wunsch, das galvanische Element so auszugestalten, daß ein möglichst geringes Volumen beansprucht wird, wobei der Katholyt und der Anolyt in einem eigenen Reservoir gelagert werden, welche mit entsprechenden Pumpen z.B. über einen gemeinsamen Motor durch das System gepumpt werden. Sowohl für die Separatoren als auch für die Elektroden haben sich Kunststoffmaterialien besonders bewährt, wobei die Elektroden einen inneren Bereich aufweisen, der kunststoffgebundenen Kohlenstoff, z.B. Grafit, Aktivkohle, hat, od dgl. aufweist. Derartige Elektroden eignen sich vor allem für die bipolare Bauweise von Akkumulatoren.

Es ist bereits eine Batterie bekannt geworden, die Separatoren aus Kunststoff und kunststoffgebundenen kohlenstoffgefüllten Elektroden aufweist. In den Separatoren sind Vertiefungen vorgesehen, durch die ein Verteilerkanal für den Elektrolyten im Elektrodenraum gebildet wird, wobei die Elektroden und die Separatoren mit Polypropylen aufgebaut sind und durch einen geeigneten Klebstoff miteinander verbunden werden. Dieser Klebstoffauftrag ist jedoch außerordentlich schwierig technisch zu beherrschen, da sowohl ein zu geringer als auch ein zu großer Klebstoffauftrag vermieden werden muß, da sonst keine ausreichende dichte Flüssigkeitsverbindung aufgebaut wird, bzw. die Verteilerkanäle durch den Klebstoff verschlossen werden, womit eine unzureichende Zufuhr des Elektrolyten in eine Zelle verursacht wird.

Aufgabe der vorliegenden Erfindung besteht darin, ein galvanisches Element, insbesondere Sekundärelement, vorzugsweise Zink-Brom-Element, das besonders betriebssicher ist, zu schaffen, bei welchem die Elektroden und/oder die Separatoren flüssigkeitsdicht miteinander verbunden, z.B. verklebt werden können und die Zuleitung bzw. die Ableitung des Elektrolyten störungsfrei bewerkstelligt werden kann, wobei gleichzeitig die elektrischen Widerstände der Zu- und Ableitungen unabhängig von der Konstruktion des galvanischen Elementes gewählt werden können.

Das erfindungsgemäße galvanische Element, insbesondere Sekundärelement mit umlaufender Elektrolytflüssigkeit, einer Vielzahl von, vorzugsweise bipolaren kunststoffgebundenen Kohlenstoff enthaltenden, Elektroden, einer Vielzahl von Separatoren, wobei die Separatoren und die Elektroden zumindest im Bereich ihrer äußeren Ränder unmittelbar miteinander flüssigkeitsdicht verbunden, z.B. verklebt sind, wodurch Anoden- und Kathodenräume gebildet sind, mit Verteilerkanäle für den Elektrolyten in den Anordenräumen bzw.

Kathodenräumen, welche vorzugsweise durch Vertiefungen im Bereich der Elektrodenränder und/oder Separatorränder gebildet sind, welche untereinander flüssigkeitsleitend verbunden sind, besteht im wesentlichen darin, daß die Anodenräume und die Kathodenräume über, zumindest je eine Elektrolytzuleitungs- und zumindest je eine Ableitungsöffnung, welche die Ränder von Elektroden und/oder Separatoren durchsetzen, welche Ränder sich im wesentlichen quer zu den Elektroden bzw. Separatoren erstrecken und über gesonderte elektrolytleitende Verbindungsstücke über die einander entsprechenden Öffnungen jeweils untereinander flüssigkeitsdicht zur Elektrolytzu- bzw. -ableitung aus den Anodenräumen bzw. Kathodenräumen verbunden sind. Dadurch ist ein galvanisches Element geschaffen, bei dem es möglich ist, sowohl die Elektrolyt- zu- bzw. -ableitung besonders strömungstechnisch sicher zu gewährleisten, wobei gleichzeitig das galvanische Element einen besonder geringen Raum im Anspruch nimmt, und eine sehr einfache und sichere Art und Weise zur Erzeugung der galvanischen Elemente gegeben ist und eine hohe Energiedichte bei gleichmäßiger Belastung der einzelnen Elektroden ermöglicht.

Ist jede Öffnung jeweils mit einem Kanal im Verbindungsstück verbunden, wobei die Kanäle jeweils mittel- bzw. unmittelbar in zumindest einem Elektrolyt Zu- bzw. Ableitungshauptkanal münden, so ist eine Konstruktion gegeben, die einen besonders geringen Strömungswiderstand aufweisen kann, wodurch ein besonders geringer Verbrauch an Hilfsenergie erforderlich wird.

Sind die Öffnungen von zumindest einem Verbindungsstück für die Zufuhr und/oder Ableitung des Elektrolyten des Anodenraumes und/oder des Kathodenraumes zusätzlich zum Elektrolythauptkanal über einen Querkanal verbunden, so kann dadurch eine unerwünschte Zinkablagerung, die z.B. zum Zuwachsen von Öffnungen führen kann, durch Erzeugen eines elektrischen Gegenstromes vermieden werden.

Weist der Querkanal einen der Fläche variierenden Querschnitt auf, insbesondere in der Form, daß die Querschnittsfläche bis zur Mitte des Querkanals abnimmt und dann wieder zunimmt, so können Energieverluste besonders gering gehalten werden, wobei gleichzeitig eine unerwünchte Zinkablagerung in den Zuführungskanälen vermeidbar wird.

Sind die Kanäle im Verbindungsstück in Reihe, insbesondere versetzt in zwei Reihen angeordnet, so ist eine besonders einfache Verbindungs mit den jeweiligen Elektrolythauptkanälen gegeben, wobei so beispielsweise nur zwei Verbindungsstücke vorgesehen werden sollen, jeweils eine Reihe den Anodenräumen zugeordnet ist, und die andere Reihe den Kathodenräumen zugeordnet ist, und die jeweils mit einem eigenen Elektrolythauptkanal, z.B. für die Zuleitung bzw. Ableitung des Elektrolyts, verbunden sind.

Ist der Querkanal des Verbindungstückes mit einzelnen Teilstücken zwischen den jeweiligen Zu- bzw. Ableitungen aus des Anoden- bzw.

Kathodenräumen mit zumindest teilweise unterschiedlichen Längen bei vorzugsweise gleichbleibendem Querschnitt, insbesondere mit zum mittleren Elektrodenraum zunehmender Länge aufgebaut, so kann auf besonders einfache Art und Weise eine unerwünschte Zinkablagerung verhindert werden, wobei die dabei fließenden elektrischen Ströme durch Ausbildung der Länge der einzelnen Teilstücke besonders genau dimensioniert werden kann. Sind die einzelnen Teilstücke mit Rohrstücken, Schläuchen od. dgl. aufgebaut, so sind besonders einfache Teilstücke erhaltbar. Weisen zwei Teile des Verbindungstückes eine Verbindungsebene auf, durch welche die Zu- und/oder Ableitungen führen, und in zumindest einem Stück in der Verbindungsebene die Zu- und/oder Ableitungen jeweils untereinander verbindende im Querschnitt etwa halbkreisförmige od. dgl. Ausnehmungen auf, so ist ein Zwischenstück gegeben, das sowohl den elektrischen als auch den strömungstechnischen Erfordernissen besonders günstig Rechnung trägt, und welches gleichzeitig besonders günstig für die Formgebung aus Kunststoff, z.B. durch Spritzguß od. dgl. geeignet ist.

Weisen die Öffnungen einen rechteckigen Querschnitt auf, und weisen die Kanäle im Verbindungsstück im an die Öffnung anschließenden Bereich einen entsprechenden Querschnitt auf, wobei der Kanal in einen kreisförmigen Querschnitt übergeht, so ist eine besonders vorteilhafte Zuführungsmöglichkeit und Ableitungsmöglichkeit für den Elektrolyten gegeben.

Durchsetzen die Öffnungen eine Schicht, die die Elektroden- und Separatorenränder umgibt, so ist eine besonders einfache Konstruktion des galvanischen Elementes gegeben, da durch diese Schicht eine flüssigkeitsdichte Verbindung der Elektroden und Separatoren erreichbar ist.

Ist die Schichte aus dem Material der Elektroden und/oder Separatoren durch Aufschmelzen derselben gebildet, so ist eine besonders einfach herzustellende und besonders dichte Verbindung gegeben.

Wird die Schichte durch eine Umhüllung der Ränder gebildet, so können die Ränder der Elektroden bzw. der Separatoren beliebig ausgeführt sein, z.B. mit Kohlenstoff gefüllt werden, ohne daß die Gefahr einer zusätzlichen Beeinträchtigung z.B. Kurzschlußbildung und dgl. der Batterie besteht.

Eine besonders einfache Herstellung des galvanischen Elementes ist dann erreichbar, wenn das Verbindungsstück, die Elektroden und/oder Separatoren an ihren kooperierenden Flächen Führungselemente, insbesondere Nuten und Federn, aufweisen.

Ist zumindest ein Kanal im Zwischenstück geteilt, und weist neben der Mündung in einen Elektrolytzu- bzw. -ableitungshauptkanal und gegebenenfalls einen Querkanal eine Einmündung in einen verschließbaren Kanal auf, so besteht die Möglichkeit, daß ohne den Betrieb der Batterie zu stören, jeweils ein bestimmter Anoden- bzw. Kathodenraum auf seinen Zustand untersucht werden kann. So kann beispielsweise ein Thermoelement eingeführt werden, Elektrolytflüssigkeit entnommen werden, diese Zelle spezifisch einem Flüssigkeitsaustausch unterworfen werden, um beispielsweise Gasblasen zu entfernen, und dgl. Auf diese Art und Weise kann somit auf einfachste Art und Weise eine Überprüfung des Betriebszustandes und auch teilweise Korrekturen vorgenommen werden.

Ist der in dem Elektrolytzu- bzw. -ableitungskanal mittel- bzw. unmittelbar mündende Kanal teilweise gekrümmt ausgebildet, und erstreckt sich der verschließbare Kanal im wesentlichen geradlinig mit dem bis zur Öffnung anschließenden Kanal, so können auf besonders einfache Weise auch bei kleinstem Querschnitt Sonden, Schläuchse und dgl. in den Anoden- bzw. Kathodenraum eingeführt werden. Ist zumindest ein Teil der Wandung des gekrümmt ausgebildeten Kanals mit zumindest einem Füllstück im Verbindungsstück aufgebaut, wobei das/die Füllstücke gegebenenfalls die verschließbaren Kanäle aufweisen, und vorzugsweise miteinander verbunden sind, so trägt eine derartige Ausbildung den Erfordernissen eine Zink-Brom-Batterie sowohl strömungstechnisch als auch elektrische besonders günstig Rechnung, wobei weiters eine besonders einfache Form geschaffen ist, die sich für die Fertigung aus Kunststoff hervorragend eignet.

Das erfindungsgemäße Verfahren zur Herstellung von galvanischen Elementen, insbesondere Sekundärelementen mit umlaufender Elektrolytflüssigkeit, wobei eine Vielzahl, insbesondere bipolarer Elektroden, welche mit thermoplastischem Material aufgebaut sind, und in ihrem inneren Bereich eine elektroaktive Substanz, insbesondere kunststoffgebundenen Kohlenstoff aufweisen, und Separatoren, welche mit thermoplastischem Material aufgebaut sind, an ihren Rändern miteinander verschweißt werden, besteht im wesentlichen darin, daß die Elektroden und/oder die Separatoren gemeinsam, gegebenenfalls mit versteifenden Endplatten, gegeneinander gehalten und gepreßt werden und die Ränder der Elektroden und Separatoren, gegebenenfalls der Endplatten quer zur flächigen Erstreckung der Elektroden bzw. Separatoren aufgeschmolzen werden, insbesondere über eine benachbart zu den Rändern bzw. in Anlage auf diese verfahrener erhitzter Metallspiegel und sodann die Schmelze, vorzugsweise unter Beaufschlagung mit einem Kühlmittel, z.B. Luft erstarrt wird, nachdem der Metallspiegel ausgefahren wird. Bei den bislang bekannten Akkumulatoren eingangs beschriebener Art, wurden die einzelnen Bauteile miteinander verklebt, wobei das galvanische Element in Betriebzustand zur weiteren Abdichtung z.B. durch Spannschrauben, oder dgl. zusammengepreßt wurde. Da sowohl Elektroden als auch Separatoren beispielsweise aus Polypropylen aufgebaut sein können, und Polypropylen aufgrund seiner chemisch hochinerten Zusammensetzung nur ausgesprochen schleucht zur Klebung geeignet ist, insbesondere wenn keine Vorbereitungen, wie z.B. Anätzen, Aufrauhen, durch stille elektrische Entladungen und dgl. durchgeführt wird, war es bislang ein ungelöstes Problem, die Bauteile einer galvanischen Zink-Brom-Zelle, die aus einem Material bestehen müssen, welches bromresistent ist, dicht zu verbinden, wobei gleichzeitig keine Verstopfung von feinen Kanälen, z.B. Zuleitungskanälen, welche in den Separatoren bzw. in den Elektroden vorgesehen sind, auftritt. Es war völlig überraschend, daß nach dem erfindungsgemäßen Verfahren ein galvanisches Element erhalten werden kann, das auch die erforderliche mechanische Beanspruchbarkeit aufweist, und eine vollkommene Freiheit von Leckagen gewährleistet.

Ein galvanisches Element, das eine besonders einfache Verbindung mit den Elektrolytvorratsbehälten über ein Zwischenstück erlaubt, kann dann erhalten werden, wenn Öffnungen, die die Ränder von Elektroden und/oder Separatoren durchsetzen, welche Ränder sich im wesentlichen quer zu denselben erstrecken, vor bzw. während dem Schmelzen der Ränder mit insbesondere thermisch isolierenden Füllstücken, z.B. mit Trennmittel beaufschlagten Zapfen, Polytetrafluoräthylenfüllstücken, oder dgl. verschlossen werden. Dadurch kann erreicht werden, daß die Öffnungen, welche durch die durch die Anoden- bzw. Kathodenräume führenden Leitungen zu den Rändern gebildet werden, eine bestimmte geometrische Ausbildung besitzen, und einen, bezogen auf die Serienproduktion reproduzierbaren Abstand aufweisen, sodaß eine hohe Dichtigkeit gewährleistet sein kann.

Werden in die Öffnungen vor dem Aufschmelzen Rohre bzw. Schläuche aus thermoplastischem Material eingeführt, so kann beispielsweise mit einem Spiegel, welcher Öffnungen aufweist, durch die die Rohre hindurchgeführt werden, ein Einschmelzen von Rohren bzw. Schlächen erreicht werden, wobei diese Schläuche, z.B. in einem Zwischenstück münden das einen Elektrolythauptzuleitungs- bzw. -ableitungskanal aufweist.

Entsprechend dem Verfahren zur Herstellung des galvanischen Hauptelementes kann auch ein elektrolytleitendes Verbindungsstück des galvanischen Elementes für die einzelnen Kathoden- oder Anodenräume hergestellt werden, wobei ein thermoplastischer Teil mit einer Vielzahl in Abstand voneinander angeordneten, vorzugsweise zylindrischen Ausnehmungen, in welche Rohre bzw. Schläuche aus thermoplastischem Material in das Teil eingeführt werden, worauf das thermoplastische Material des Teiles und der Rohre bzw. Schläuche teilweise vorzugsweise über ein erhitzte Platte, z.B. Metallspiegel aufgeschmolzen, und sodann erstarren gelassen wird. Bei einem derartige hergestellten Zwischenstück ist es möglich, es aus einem chemisch im wesentlichen inerten Material z.B. Polypropylen zu erzeugen, wobei die Schläche bzw. Rohre in den erwünschten Abständen voneinander gehalten sein können, und ein höchste Dichtheit, da das thermoplastische Material ineinander verschmolzen ist, erreichbar wird.

Werden vor und/oder während des Aufschmelzens und gegebenenfalls dem Erstarren die Seelen der Rohre bzw. Schläuche mit Füllstücken z.B. mit Trennmittel versehenen Zapfen, insbesondere thermisch isolierende Füllstücke z.B. Teflon, die gegebenenfalls auf der Platte, insbesondere Metallspiegel befestigt sind, verschlossen, so kann mit hoher Präzision und geringem fertigungstechnischen Aufwand ein Zwischenstück materialspezifisch gefertigt werden.

Im folgenden wird die Erfindung anhand der Beispiele näher erläutert.

Es zeigen Fig. 1 einen Separator in Draufsicht, Fig. 2 einen Ausschnitt aus einer Batterie, Fig. 3 und 4 einen Schnitt durch ein Verbindungsstück und Fig. 5 und 6 das Verbindungsstück in Draufsicht, Fig. 7 und 8 Bauteile für Verbindungsstücke und Fig. 9 bis 10 Vorrichtungen zur Herstellung eines galvanischen Elementes.

Die im folgenden beschriebene Zink-Brom-Batterie besteht im Prinzip aus drei Hauptkomponenten. Der zentrale Teil wird durch das eigentliche galvanische Elemente gebildet, das aus einer Vielzahl miteinander flüssigkeitsdicht verbundener Elektroden und Separatoren besteht. Die Elektroden sind in bipolarer Anordnung vorgesehen und bestehen im wesentlichen aus kunststoffgebundenem Kohlenstoff mit einem dieses umgebenden Rahmen aus einem thermoplastischen Material. Durch die bipolare Anordnung wirkt eine Seite der Elektrode als positiver Pol (Brom-Elektrode) und die andere Seite als negativer Pol (Zink-Elektrode). Durch die relativ dünne Ausbildung des Separators kann der elektrische Widerstand besonders gering gehalten werden, wobei gleichzeitig der Separator als Diaphragma wirkt, d.h. als wirksame Barriere gegen den unerwünschten Transport von Brom an die Zinkelektrode und umgekehrt. Der zweite wesentliche Bestandteil des galvanischen Elementes ist der Elektrolyt, der mit einer wäßrigen Zink-Bromid-Lösung und einem organischen Komplexbildner zur Bindung des elementaren Broms aufgebaut ist. Der Elektrolyt zirkuliert in zwei voneinander getrennten Kreisläufen durch das galvanische Element. Zur Zirkulation des Elektrolyten ist ein weiterer Bestandteil des galvanischen Elementes vorgesehen und zwar sind dies die Pumpen sowie die Vorratsbehälter für den Elektrolyten.

Während der Ladung reagiert das entstehende Brom unter Bildung eines organischen Bromkomplexes, der als zweite flüssige Phase die Speicherung des Broms bewirkt. Infolge der höheren spezifischen Dichte trennt sich diese bromreiche Phase im Reservoir für die Kathodenflüssigkeit von der übrigen Lösung. Im geladenen Zustand wird daher der Reaktionspartner für die positive Elektrode außerhalb der elektrochemischen Zelle aufbewahrt, und kann in keine Reaktion mit dem Zink treten. Verluste durch Selbstentladung werden daher ausgeschaltet, die Batterie kann beliebig lange wartungsfrei gelagert werden. (Die Anodenflüssigkeit verarmt während der Ladung an Zink, das in metallischer Form an der negativen Elektroden abgeschieden wird).

Während der Entladung wird die bromreiche organische Phase der passivierten Elektrode mit dem umgewälzten Elektrolyten zugeführt, während an der negativen Elektrode Zink in den Elektrolyten in Lösung geht. Als weiteres systemimmanentes Charakteristikum können die durch die bipolare Elektrodenanordnung in Serie bedingten leck- oder parasitären Ströme gelten, die infolge der zu den einzelnen Zellen parallelen, über eine gemeinsame Hauptleitung erfolgenden Elektrolytzuführung auftreten und zu Energieverlusten und ungleichmäßiger Zinkabscheidung (Dendritenbildung) führen. Dieser Effekt nimmt mit steigender Zahl der Einzelzellen zu, und wirkt sich hinsichtlich einer Zinkakkumulation am stärksten bei den Elektrolytzuführungen in der Nähe des negativen Endpols des bipolaren Zellblockes aus. Die normale Elektrolytzirkulation wird gestört, die Zinkabscheidung in den einzelnen Zellen wird uneinheitlich, so daß schließlich deren voneinander abweichendes Verhalten Funktionsuntüchtigkeit der Batterie verursachen kann.

Als wirkt Maßnahme zur Eliminierung der parasitären Ströme hat sich eine elektrische Schaltung bewährt, bei welcher der Batteriespannung an den Elektrolyleitungen eine etwa gleich große Gegenspannung aufgezwungen wird, welche den Stromfluß kompensiert. Dieser Leckstromschutz erfordert nur geringen Energieaufwand, der direkt von der Batterieleistung abgezweigt wird.

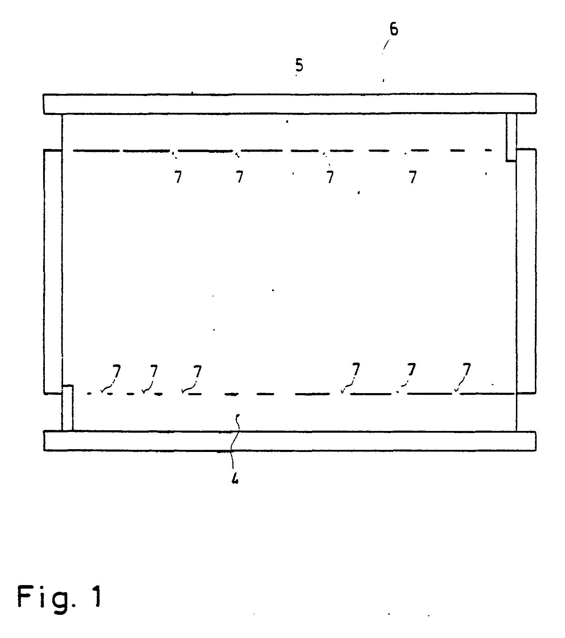

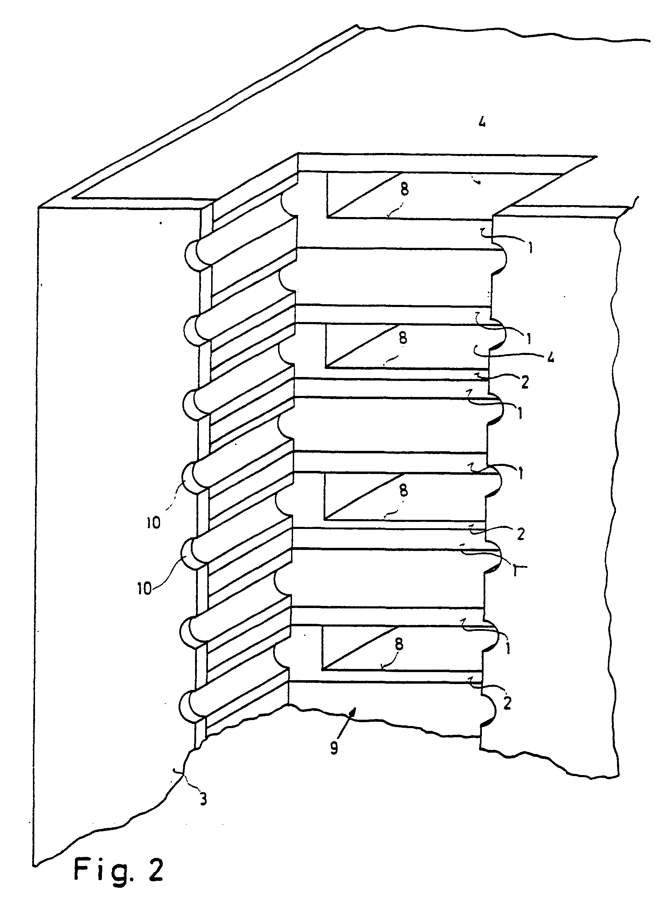

In Fig. 2 ist ein galvanisches Element abschnittsweise dargestellt, das aus einzelnen Elektroden 1 und Separetoren 2 aufgebaut ist. Die Elektroden und Separatoren weisen eine gemeinsame Umhüllung 3 auf, die durch Aufschmelzen des Elektroden- und Separatorenmaterials gebildet wurde. Wie aus Fig. 1 ersichtlich, weist der Separator eine Vertiefung auf, durch welche Verteilerkanäle 4 und 5 gebildet sind. Zu ihrer zentralen Fläche 6 sind verschieden große Zutrittsöffnungen 7 vorgesehen, sodaß eine gleichmäßige Verteilung des Elektrolyten sowohl bei der Zuleitung als auch bei der Ableitung desselben aus der Anoden- bzw. Kathodenraum gewährleistet ist. Die Elektroden können entweder analog zu den Separatoren aufgebaut sein oder es besteht auch die Möglichkeit, daß die Separatoren im wesentlichen plan und lediglich die Elektroden, wie hier beschrieben ausgeführt sind. Jedenfalls muß gewährleistet sein, daß zwischen Separator und Elektrode ein Raum gebildet ist, welcher für den Zutritt des Elektrolyten und zur Abwicklung der eletrochemischen Reaktion ausreichend ist.

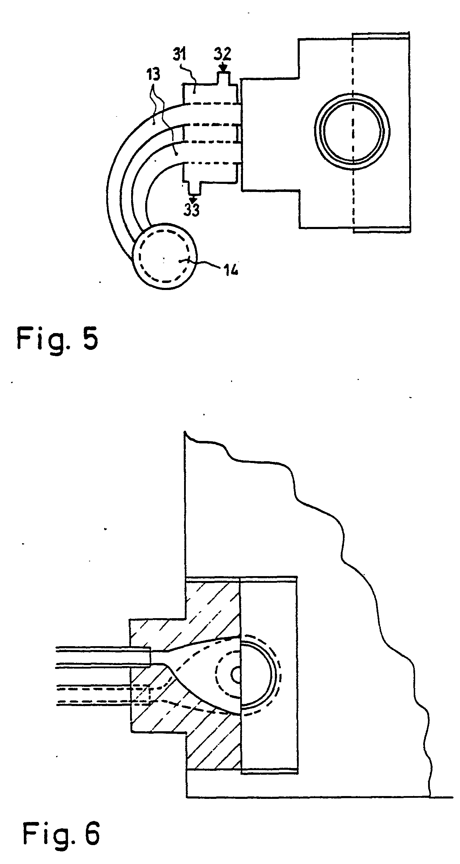

Wie aus Fig. 2 ersichtlich, weist das Bündel aus Elektroden und Separatoren Öffnungen 8 der Verteilerkanäle 4 auf, die die Separatoren im wesentlichen quer zur ihrer flächigen Erstreckung durchsetzen. Im galvanischen Element ist eine prismatische Ausnehmung 9 vorgesehen, die Nuten 10 aufweist. In dieser prismatischen Ausnehmung kann das Verbindungsstück 11, das Federn 12 aufweist, flüssigkeitsdicht eingeschoben werden. Es kann, wie aus Fig. 2 ersichtlich, das Verbindungsstück, von welchem je nach Konstruktion zumindest vier oder zumindest zwei vorgesehen sein können, lediglich zur Verbindung jedes zweiten Elektrolytraumes ausgebildet sein, wobei dann durch dieses Verbungsstück entweder die Zuleitung oder die Ableitung des Elektrolyten aus dem Anoden- oder Kathodenraum erfolgt. Jede Öffnung 8 ist einem Kanal 13 zugeordnet, wobei die Kanäle 13 (vgl. Fig. 5) in einem Elektrolytzu- bzw. -ableitungskanal 14 münden, der seinerseits mit dem Reservoir und der Pumpe flüssigkeitsdicht verbunden ist. Die Kanäle 13 führen durch einen Wärmetauscher 31 mit Wasserzu- 32 und -ableitungsöffnung 33, wodurch eine wirksame Temperatursteuerung des Elektrolyten zum Betrieb des Elementes bei optimaler Temperatur ermöglicht ist.

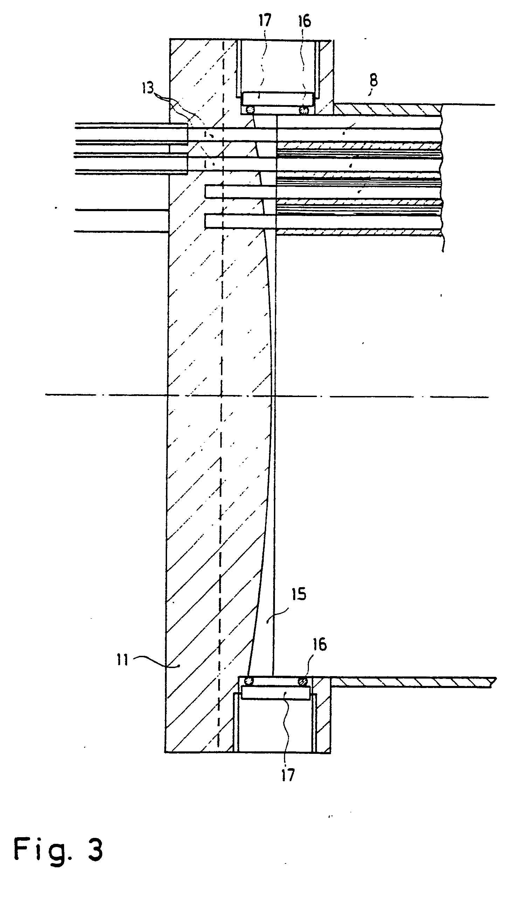

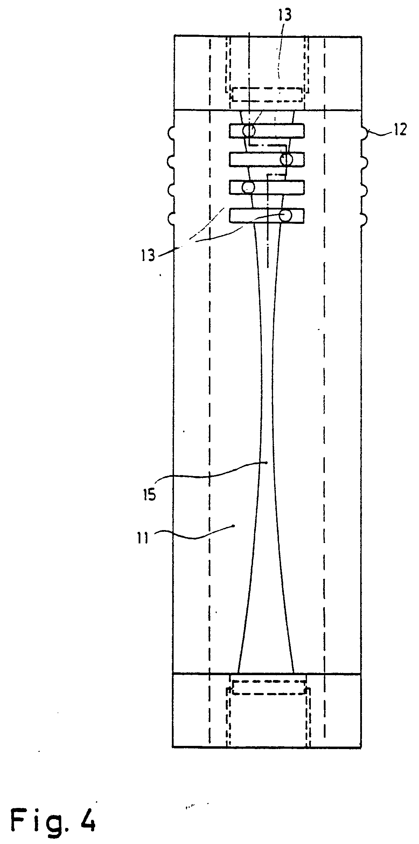

Im Verbindungsstück kann, wie besonders deutlich aus Fig. 3 und Fig. 4 ersichtlich, ein Querkanal 15 vorgesehen sein, der an seinen beiden Enden über einen O-Ring 16 und eine Graftiplatte 17 abgeschlossen ist. Wie insbesondere aus Fig. 4 ersichtlich, weist der Querkanal einen in der Fläche variierenden Querschnitt auf, wobei die Querschnittsfläche bis zur Mitte des Querkanals abnimmt und dann wieder zunimmt.

Die Kanäle 13 können—wie in Fig. 4 dargestellt—versetzt angeordnet sein. Die Kanäle im Verbindungsstück erweitern sich—wie im Schnitt der Fig. 6 zu sehen—zu einem rechteckigen Querschnitt, welcher dann jeden der Öffnungen 8 im Separator bzw. in der Elektrode entspricht. Dieser rechteckige Querschnitt geht sodann in einen kreisförmigen über, wobei durch die Länge der Kanäle, die beispielsweise durch angesetzte Schlauchleitungen od. dgl. gebildet werden, der elektrische Widerstand eingestellt werden kann.

Die Verbindungsstücke können entweder durch Klemmsitz 16, 17 durch eigene mechanische Spannvorrichtungen oder Schmelzverbindung mit dem Elektroden- und Separatorbündel flüssigkeitsdicht verbunden sein.

Falls erforderlich, kann pro Elektrolytraum auch eine Mehrzahl von Separatoren vorgesehen sein, falls ein größeres Volumen erwünscht ist.

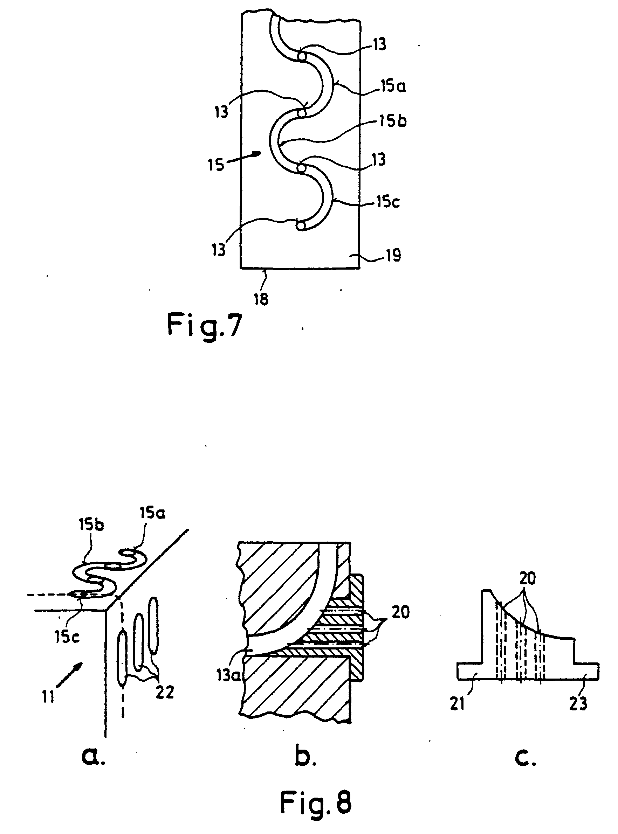

Der in Fig. 7 dargestellte Bauteil 18 eines Verbindungsstückes wird an seiner zum Betrachter weisenden Verbindungsebene 19 durch einen weiteren Teil durch Spiegelschweißen teilweise verschlossen. Der Querkanal, welcher die einzelnen Kanäle 13 z.B. aus den Anodenräumen untereinander verbindet, wird durch Teilstücke 15a, 15b, 15c gleichen Querschnittes aber unterschiedlicher Länge gebildet, wobei die Länge in Richtung zu den mittleren Elektrodenräumen zunimmt, sodaß der Widerstand zwischen den einzelnen Kanälen im Bereich der mittleren Elektroden größer ist, als bei den am Rand angeordneten Elektroden.

Das in Fig. 8 teilweise im Schnitt dargestellte Verbindungsstück 11 weist, wie in Fig. 8b ersichtlich, einen gekrümmten Kanal 13a auf, welcher in weitere verschließbare Kanäle 20 mündet. Ein Teil der Wandung des gekrümmt ausgebildeten Kanales 13a wird durch ein Füllstück 21, das die Kanäle 20 aufweist, gebildet. Dieses Füllstück ist in Ansicht von vorne in Fig. 8c dargestellt und wird in die Schlitze 22 des Zwischenstücks gemäß Fig. 8a eingeführt, wobei auf einer durchgehenden Leiste 23 jeweils die einzelnen Stege mit den Kanälen 20 in Abstand voneinander angeordnet sein können, sodaß mit einem Füllstück sämtliche Schlitze 22 verschlossen werden können. Diese Kanäle 20 können beispielsweise zur Einführung von verschiedenen Sonden, z.B. Thermoelement, Drucksensor, Vergleichselektrode, Leitfähigkeitselektrode, optischer Sensor, od. dgl. verwendet werden, es besteht jedoch auch die Möglichkeit, aktiv in den elektrochemischen Vorgang einzugreifen, z.B. Inertgasspülung, Gasableitung, aber auch Geschwindigkeitsmessung der Elektrolytströmung durch Einbringen von Gasblasen und Beobachtung der Fortbewegungsgeschwindigkeit desselben. Über diese Kanäle 20 besteht somit die Möglichkeit, ein Diagnosezentrum für ein galvanisches Element aufzubauen, ohne dadurch den normalen Betrieb dieses Elementes zu gefährden. Das Füllstück kann aber auch zum Verschließen eines Kanals 13 dienen, z.B. um diesen Elektrodenraum von der restlichen Zelle zu trennen.

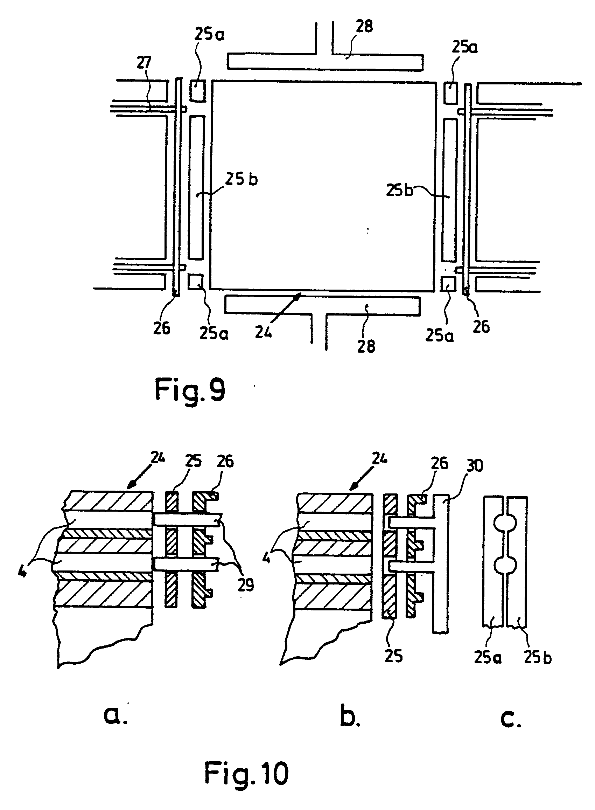

Bei der in Fig. 9 schematisch dargestellten Vorrichtung zur Durchführung des erfindungsgemäßen Verfahrens, wird ein Paket 24, das aus den miteinander zu verbindenden Elektroden und Separatoren durch Spiegel 25, die geteilt 25a und 25b ausgebildet sind, an den Rändern aufgeschmolzen, und gleichzeitig gegeneinander gepreßt, wobei eine Platte 26, z.B. eine Frontplatte aus thermoplastischem Material gleichzeitig aufgeschmolzen wird. In dieser Platte können aber auch beispielsweise Füllstücke 27, z.B. Teflonfüllstücke (Teflon ist ein eingetrogeues Warenzeichen), Zapfen, die mit Trennmittel beaufschlagt sind, od.dgl., vorgesehen werden. Durch die gegeneinander gepreßten Heizspiegel 25 wird das auch durch Stempel 28 gegeneinandergedrückte Paket aus Elektroden und Separatoren an seinen Rändern aufgeschmolzen, wobei durch die Füllstücke die Kanäle, welche für die Zu- und Abführung des Elektrolyten dienen, freigehalten werden, bzw. mit Verbindungsschläuchen versehen werden können. Nachdem sowohl die Ränder als auch die Frontplatte 26 genügend aufgeschmolzen sind, wird der geteilte Spiegel 25a, 25b ausgefahren und es werden die Frontplatten gegen das Paket gedrückt, wodurch eine dichte Verbindung erhalten wird. Soll ein z.B. die Kathodenräume verbindender Gasableitungskanal gleichzeitig gebildet werden, so kann auf das Paket ein Draht z.B. mit einem Durchmesser von 0,5 mm oder drei- bzw. vieleckigem Querschnitt während des Verbindens aufgelegt und sodann herausgezogen werden, womit ein Kanal geschaffen wird, über welchen eine Entlüftung der Zellen ohne elektrische Verbindung derselben erhalten wird.

In den Fig. 10a, 10b und 10c ist besonders deutlich veranschaulicht, wie erreicht wird, daß z.B. die Kanäle 4, welche zu den Elektrodenräumen führen, bei dem Spiegelschweißen nicht verschlossen werden, wobei diese Verfahren ebenfalls für die Herstellung des Verbindungsstückes dienen kann. Zwischen dem Paket aus Elektroden und Separatoren und der Frontplatte 26 ist ein Schweißspiegel 25 angeordnet, wobei sowohl durch die Frontplatte als auch durch den Schweißspiegel Teflonschläuche 29 geführt sein können. Diese Teflonschläuche 29 führen bis in die Kanäle 4 und sichern so nach Ausfahren des geteilten Spiegels 25a und 25b und Gegendrücken des teilweise aufgeschmolzenen Paketes und der teilweise aufgeschmolzenen Frontplatte, daß die Kanäle 4 nicht verschlossen werden. Ansteele der Teflonschläuche können auch Schläuche aus thermoplastischem Material, z.B. Polypropylen, eingesetzt werden, wobei dann ein Verschweißen dieser Schläuche vor bzw. in den Kanälen 4 stattfindet, wobei gleichzeitig in der Frontplatte od. dgl. entweder eine Reihe von Bohrungen oder ein durchgehender Schlitz, durch welche(n) die Schläuche geführt sind, vorgesehen sein kann.

Bei der Ausführungsform gemäß 10b ist anstelle der Teflonschläuche ein eigenes Kammstück 30 vorgesehen, welches thermisch isoliert ist und gegebenenfalls mit einem Trennmittel beaufschlagt ist, wodurch ebenfalls die Öffnungen der Kanäle 4 auch nach dem Verschweißen freigehalten sind, wobei während des Gegeneinanderdrückens des Paketes 24 und der Endplatte 26 die Fortsätze des Kammstückes 30 in die Kanäle 4 reichen.

**Patentansprüche**

1. Galvanisches Element, insbesondere Sekundärelement, mit umlaufender Elektrolytflüssigkeit, einer Vielzahl von vorzugsweisen bipolaren, kunststoffgebundenen Kohlenstoff enthaltenden Elektroden (1), einer Vielzahl von Separatoren (2), wobei die Separatoren (2) und die Elektroden (1) zumindest im Bereich ihrer äußeren Ränder im wesentlichen unmittelbar miteinander flüssigkeitsdicht verbunden, z.B. verklebt sind, wodurch Anoden- und Kathodenräume gebildet sind, mit Verteilerkanälen (4, 5) für den Elektrolyten in den Anodenräumen bzw. Kathodenräumen, welche vorzugsweise durch Vertiefungen im Bereich der Elektrodenränder und/oder Separatorränder gebildet sind, untereinander flüssigkeitsleitend verbunden sind, dadurch gekennzeichnet, daß die Anodenräume und die Kathodenräume über zumindest je eine Elektrolytzuleitungs- und zumindest je eine Elektrolytableitungsöffnung (8), welche die Ränder von Elektroden (1) und/oder Separatoren (2) durchsetzen, welche Ränder sich im wesentlichen quer zu denselben erstrecken, und durch gesonderte, insbesondere einteilige elektrolytleitende Verbindungsstücke (11) über die einander entsprechenden Öffnungen jeweils untereinander flüssigkeitsdicht zur Eletrolytzu- bzw. -ableitung aus den Anodenräumen bzw. Kathodenräumen verbunden sind.

2. Galvanisches Element nach Anspruch 1, dadurch gekennzeichnet, daß jede Öffnung (8) jeweils mit einem Kanal (13) im Verbindungsstück (11) verbunden ist, wobei die Kanäle vorzugsweise durch einen Wärmetauscher (31) geführt sind und jeweils mittel- bzw. unmittelbar in einem gegebenenfalls im Verbindungsstück angeordneten Elektrolytzu- bzw. -ableitungshauptkanal (14) münden.

3. Galvanisches Element nach Anspruch 1 oder 2, dadurch gekennzeichnet, daß in zumindest einem Verbindungsstück die Öffnungen (8) für die Zu- und/oder Ableitung des Elektrolyten aus dem Anodenraum und/oder Kathodenraum zusätzlich zum Elektrolythauptkanal (14) über einen Querkanal (15) verbunden sind.

4. Galvanisches Element nach Anspruch 3, dadurch gekennzeichnet, daß der Querkanal (15) einen in der Fläche variierenden Querschnitt aufweist.

5. Galvanisches Element nach Anspruch 4, dadurch gekennzeichnet, daß der Querschnittsfläche bis zur Mitte des Querkanals (15) abnimmt und dann wieder zunimmt.

6. Galvanisches Element nach Anspruch 1, 2 oder 3, dadurch gekennzeichnet, daß der Querkanal (15) des Verbindungsstückes (11) mit einzelnen Teilstücken (15a, 15b, 15c) zwischen den jeweiligen Zu- bzw. Ableitungen aus den Anoden- bzw. Kathodenräumen mit zumindest teilweise unterschiedlichen Längen bei vorzugsweise gleichbleibendem Querschnitt, insbesondere mit zum mittleren Elektrodenraum zunehmender Länge, aufgebaut ist.

7. Galvanisches Element nach Anspruch 6, dadurch gekennzeichnet, daß die einzelnen Teilstücke mit Rohrstücken, Schläuchen oder dgl. aufgebaut sind.

8. Galvanisches Element nach Anspruch 6, dadurch gekennzeichnet, daß zwei Teile (18) des Verbundungsstückes (11) eine Verbundungsebene (19) aufweisen, durch welche die Zu- und/oder Ableitungen führen und in zumindest in einem Teil in der Verbindungsebene (19) die Zu- und/oder Ableitungen jeweils untereinander verbindende Teilstücke (15a, 15b, 15c) des Querkanals im Querschnitt etwa halbkreisförmige oder dgl. Ausnehmungen aufweisen.

9. Galvanisches Element nach einem der Ansprüche 1 bis 8, dadurch gekennzeichnet, daß die Kanäle (13) im Verbindungsstück (11) in Reihe, insbesondere versetzt in zwei Reihen angeordnet sind.

10. Galvanisches Element nach einem der Ansprüche 1 bis 9, dadurch gekennzeichnet, daß die Öffnungen (8) einen rechteckigen Querschnitt aufweisen und daß die Kanäle (13) im Verbindungsstück (11) im an die Öffnungen anschließenden Bereich einen entsprechenden Querschnitt aufweisen, wobei der Kanal in einen etwa kreisförmigen Kanal übergeht.

11. Galvanisches Element nach einem der Ansprüche 1 bis 10, dadurch gekennzeichnet, daß die Öffnungen (8) eine Schicht (3) die die Elektroden- und Separatorenränder umgibt, durchsetzen.

12. Galvanisches Element nach Anspruch 11, dadurch gekennzeichnet, daß die Schicht mit dem Material der Elektroden (1) und/oder der Separatoren (2) durch Aufschmelzen derselben gebildet ist.

13. Galvanisches element nach Anspruch 11, dadurch gekennzeichnet, daß die Schicht mit einer Umhüllung der Räder gebildet ist.

14. Galvanisches Element nach einem der Ansprüche 11, 12 oder 13 dadurch gekennzeichnet, daß in der Schicht ein die Anoden- bzw. Kathodenräume verbindender gegebenenfalls verschließbarer Gasableitungskanal vorgesehen ist.

15. Galvanisches Element nach einem der Ansprüche 1 bis 14, dadurch gekennzeichnet, daß das Verbindungsstück, die Elektroden und/oder Separatoren an ihren kooperierenden Flächen Führungselemente, insbesondere Nuten (10) und Federn (12) aufweisen.

16. Galvanisches Element nach einem der Ansprüche 1 bis 15, dadurch gekennzeichnet, daß zumindest ein Kanal (13a) im Verbindungsstück (11) geteilt ist und neben der Mündung in einem Elektrolytzu- bzw. -ableitungskanal und gegebenenfalls einem Querkanal (15) eine weitere Einmündung in einen verschließbaren Kanal (20) aufweist.

17. Galvanisches Element nach Anspruch 16, dadurch gekennzeichnet, daß der in dem Elektrolytzu- bzw. -ableitungshauptkanal mündende Kanal (13a) teilweise gekrümmt ausgebildet ist und daß der verschließbare Kanal (20) sich im wesentlichen geradlinig mit dem anschließenden Kanal bis zur Öffnung (8) erstreckt.

18. Galvanisches Element nach Anspruch 17, dadurch gekennzeichnet, daß zumindest ein Teil der Wandung des gekrümmt ausgebildeten Kanals (13a) mit zumindest einem Füllstück (21) im Verbindungsstück aufgebaut ist, wobei das/die Füllstück(e) gegebenenfalls die verschließbaren Kanäle (20) aufweist(en), und vorzugsweise untereinander verbunden sind.

19. Verfahren zur Herstellung von galvanischen Elementen, insbesondere Sekundärelementen, mit umlaufender Elektrolytflüssigkeit, wobei eine Vielzahl, insbesondere bipolarer, Elektroden, welche mit thermoplastischem Material aufgebaut sind, und in ihrem inneren Bereich eine elektrochemisch aktive Substanz, insbesondere kunststoffgebundenen Kohlenstoff, aufweisen, und Separatoren, welche mit thermoplastischem Material aufgebaut sind, an ihren Rändern miteinander verschweißt werden, dadurch gekennzeichnet, daß die Elektroden und/oder Separatoren gemeinsam, gegebenenfalls mit versteifenden Endplatten, gegeneinander gehalten und grepreßt werden, und die Ränder der Elektroden und Separatoren, gegebenenfalls der Endplatte quer zur flächigen Erstreckung derselben, über eine benachbart zu den Rändern bzw. in Anlage auf diese verfahrener erhitzter Metallspiegel angeschmolzen, und sodann die Schmelze, gegebenenfalls mit einem in Anlage gebrachten, vorzugsweise gleichzeitig durch den Metallspiegel geschmolzenen flächigen Material, vorzugsweise unter Beaufschlagung mit einem Kühlmittel, nachdem der Metallspiegel ausgefahren wird, erstarrt wird.

20. Verfahren nach Anspruch 19, dadurch gekennzeichnet, daß die Öffnungen, welche die Ränder von Elektroden und/oder Separatoren durchsetzen, welche Ränder sich im wesentlichen quer zu denselben erstrecken, vor bzw. während dem Erschmelzen der Ränder mit, insbesondere thermisch isolierenden Füllstücken, z.B. mit Trennmittel beaufschlagten Zapfen, die gegebenenfalls auf einem eigenen Arbeitsträger vorgesehen sind, Polytetrafluoräthylenfüllstücke oder dgl. verschlossen werden, wobei gegebenenfalls eine bei den Füllstücken geteilte Platte zwischen Aufzuschmelzendem und Arbeitsträger verfahren wird.

21. Verfahren nach Anspruch 19 oder 20, dadurch gekennzeichnet, daß in die Öffnungen vor dem Aufschmelzen Rohre bzw. Schläuche aus thermoplastischem Material eingeführt werden.

22. Verfahren zur Herstellung des elektrolytleitenden Verbindungsstückes des galvanischen Elementes nach einem der Ansprüche 1 bis 18, für die Anoden- und Kathodenräume, wobei ein thermoplastischer Teil mit einer Vielzahl in Abstand voneinander angeordneten, vorzugsweise zylindrischen Ausnehmungen bzw. einem Schlitz, Rohre bzw. Schläuche aus thermoplastischem Material in das Teil eingeführt werden, worauf das thermoplastischen Material des Teiles und der Rohre bzw. Schläuche teilweise, vorzugsweise über eine erhitzte Platte, z.B. Metallspiegel, angeschmolzen und sodann mit einem damit zu verbindenden Teil, gegebenenfalls ein gleichzeitig angeschmolzenes Paket der Elektroden und/oder Separatoren erstarren, gelassen wird.

23. Verfahren nach Anspruch 22, dadurch gekennzeichnet, daß vor und/oder während des Aufschmelzens und gegebenenfalls·dem Erstarren der Seelen der Rohre bzw. Schläuche mit Füllstücken, z.B. mit Trennmittel versehenen Zapfen, insbesondere thermisch isolierenden Füllstücken, die gegebenenfalls auf der Platte bzw. auf einem eigenen Träger befestigt sind, ausgefüllt werden.

**Revendications**

1. Elément galvanique, en particulier élément secondaire, comprenant un électrolyte liquide en circulation, plusieurs électrodes (1), de préférence bipolaires, contenant du carbone lié par une matière synthétique et plusieurs séparateurs (2), les séparateurs (2) et les électrodes (1) étant reliés, par exemple collés, ensemble pratiquement directement, par une liaison étanche aux liquides, au moins dans la zone de leurs bords externes, ce qui forme des compartiments anodiques et cathodiques, et comprenant des canaux de distribution (4, 5) de l'électrolyte dans les compartiments anodiques ou cathodiques, canaux qui sont formés de préférence par des évidements situés dans la zone des bords des électrodes et/ou des séparateurs et sont reliés entre eux par une liaison conduisant le liquide, caractérisé en ce que les compartiments anodiques et les compartiments cathodiques sont reliés à la conduite d'arrivée de l'électrolyte aux compartiments anodiques ou cathodiques et à la conduite de départ dudit électrolyte desdits compartiments par l'intermédiaire d'au moins à chaque fois une ouverture (8) d'arrivée de l'électrolyte et au moins à chaque fois une ouverture (8) de départ de l'électrolyte, qui traversent les bords des électrodes (1) et/ou des séparateurs (2), lesdits bords s'étendant pratiquement perpendiculairement aux électrodes ou séparateurs, et par des pièces de jonction (11) séparées, en particulier d'une seule partie, conduisant l'électrolyte par l'intermédiaire des ouvertures correspondant les unes aux autres à chaque fois en liaison étanche aux liquides entre elles.

2. Elément galvanique selon la revendication 1, caractérisé en ce que chaque ouverture (8) est reliée à un canal (13) situé dans la pièce de jonction (11), lesdits canaux traversant de préférence un échangeur de chaleur (31) et débouchant chaque fois, directement ou indirectement, dans un canal principal (14) d'arrivée ou de départ de l'électrolyte, éventuellement disposé dans la pièce de jonction.

3. Elément galvanique selon la revendication 1 ou 2, caractérisé en ce que, dans au moins une pièce de jonction, les ouvertures (8) pour l'arrivée de l'électrolyte au compartiment anodique et/ou au compartiment cathodique et/ou le départ de l'électrolyte de ceux-ci sont reliées en plus au canal principal d'électrolyte (14) par un canal transversal (15).

4. Elément galvanique selon la revendication 3, caractérisé en ce que le canal transversal (15) présente une section de surface variable.

5. Elément galvanique selon la revendication 4, caractérisé en ce que la surface de la section diminue jusqu'au milieu du canal transversal (15), puis croît à nouveau.

6. Elément galvanique selon la revendication 1, 2 ou 3, caractérisé en ce que le canal transversal (15) de la pièce de jonction (11) est constitué par des troncons individuels (15a, 15b, 15c) situés entre les arrivées aux compartiments anodiques ou cathodiques ou les départs desdits compartiments correspondants, tronçons qui ont des longueurs au moins en partie différentes pour une section de préférence constante, en particulier une longueur augmentant vers le compartiment d'électrode central.

7. Elément galvanique selon la revendication 6, caractérisé en ce que les tronçons individuels sont constitués par des tubes rigides, des tuyaux souples ou produits similaires.

8. Elément galvanique selon la revendication 6, caractérisé en ce que deux parties (18) de la pièce de jonction (11) présentent un plan de raccordement (19) que traversent les conduites d'arrivée et/ou les conduites de départ, et dans au moins une partie, dans le plan de raccordement (19), les conduites d'arrivée et/ou les conduites de départ présentent des tronçons (15a, 15b, 15c) du canal transversal les reliant à chaque fois entre elles sous forme d'évidements de section de forme à peu près en demi-cercle ou similaire.

9. Elément galvanique selon l'une des revendications 1 à 8, caractérisé en ce que les canaux (13) dans la pièce de jonction (11) sont disposés en rangées, en particulier suivant deux rangées décalées.

10. Elément galvanique selon l'une des revendications 1 à 9, caractérisé en ce que les ouvertures (8) présentent une section rectangulaire et que les canaux (13) dans la pièce de jonction (11) présentent, dans la zone de raccordement aux ouvertures, une section correspondante, le canal se transformant en un canal de forme à peu près circulaire.

11. Elément galvanique selon l'une des revendications 1 à 10, caractérisé en ce que les ouvertures (8) traversent une couche (3) qui entoure les bords des électrodes et des séparateurs.

12. Elément galvanique selon la revendication 11, caractérisé en ce que la couche est formée par le matériau des électrodes (1) et/ou des séparateurs (2), par soudure par fusion dudit matériau.

13. Elément galvanique selon la revendication 11, caractérisé en ce que la couche est formée par une enveloppe des bords.

14. Elément galvanique selon l'une des revendications 11, 12 ou 13, caractérisé en ce qu'il est prévu dans la couche un canal de départ des gaz, éventuellement obturable, reliant les compartiments anodiques ou les compartiments cathodiques.

15. Elément galvanique selon l'une des revendications 1 à 14, caractérisé en ce que la pièce de jonction et les électrodes et/ou séparateurs présentent, sur leurs surfaces coopérant, des éléments de guidage, en particulier des rainures (10) et des languettes (12).

16. Elément galvanique selon l'une des revendications 1 à 15, caractérisé en ce qu'au moins un canal (13a) est séparé dans la pièce de jonction (11) et présente, près de l'embouchure dans un canal d'arrivée ou de départ de l'électrolyte et éventuellement un canal transversal (15), une autre embouchure dans un canal obturable (20).

17. Elément galvanique selon la revendication 16, caractérisé en ce que le canal (13a) débouchant dans le canal principal d'arrivée ou de départ de l'électrolyte est partiellement recourbé et que le canal obturable (20) est pratiquement aligné avec le canal se raccordant à l'ouverture (8).

18. Elément galvanique selon la revendication 17, caractérisé en ce qu'au moins une partie de la paroi du canal recourbée (13a) est constituée par au moins une pièce intercalaire (21) située dans la pièce de jonction, la ou les pièces intercalaire(s) présentant éventuellement les canaux obturables (20) et étant de préférence reliées entre elles.

19. Procédé de fabrication d'éléments galvaniques, en particulier éléments secondaires, comportant un électrolyte liquide en circulation, dans lesquels plusieurs électrodes, en particulier bipolaires, constituées d'un matériau thermoplastique et renfermant une substance électrochimique- ment active, en particulier du carbone lié par une matière synthétique, et plusieurs séparateurs constitués d'un matériau thermoplastique sont soudés ensemble sur leurs bords, caractérisé en ce que les électrodes et/ou séparateurs pris ensemble, éventuellement avec des plaques terminales assurant la rigidité, sont maintenus et pressés les uns contre les autres, et les bords des électrodes et séparateurs, éventuellement des plaques terminales, sont soudés par fusion perpendiculairement à la surface des éléments, au moyen d'un réflecteur métallique chauffé amené au voisinage des bords ou au contact de ceux-ci, et ensuite la masse fondue, éventuellement avec un matériau en nappe amené au contact, de préférence fondu simultanément à l'aide du réflecteur métallique, est solidifiée, après que le réflecteur métallique a été écarté, de préférence par application d'un agent de refroidissement.

20. Procédé selon la revendication 19, caractérisé en ce que les ouvertures traversant les bords des électrodes et/ou séparateurs, bords qui s'étendent pratiquement perpendiculairement à ces éléments, sont obturées, avant ou pendant la fusion des bords, par des pièces de remplissage en polytétrafluoroéthylène ou matière similaire, en particulier des pièces de remplissage thermiquement isolantes, par exemple des chevilles appliquées avec un agent de séparation, qui sont prévues éventuellement sur un support de travail propre, une plaque divisée aux pièces de remplissage étant éventuellement amenée entre le bord à fondre et le support de travail.

21. Procédé selon la revendication 19 ou 20, caractérisé en ce que, avant la fusion, des tubes ou tuyaux souples en matière thermoplastique sont introduits dans les ouvertures.

22. Procédé de fabrication de la pièce de jonction, conduisant l'électrolyte, de l'élément galvanique selon l'une des revendications 1 à 18, pour les compartiments anodiques et les compartiments cathodiques, dans lequel les tubes ou tuyaux souples en matière thermoplastique sont introduits dans une pièce thermoplastique comportant plusieurs évidements, de préférence cylindriques, écartés les uns des autres, ou une fente, après quoi on fait fondre partiellement la matière thermoplastique de la pièce et des tubes ou tuyaux souples, de préférence à l'aide d'une plaque chauffée, par exemple un réflecteur métallique, et ensuite on fait solidifier avec une pièce à relier ainsi éventuellement un paquet soudé simultanément d'électrodes et/ou séparateurs.

23. Procédé selon la revendication 22, caractérisé en ce que, avant et/ou pendant la fusion et éventuellement la solidification, les âmes des tubes ou tuyaux souples sont remplies avec des pièces de remplissage, par exemple des chevilles pourvues d'un agent de séparation en particulier des pièces de remplissage thermiquement isolantes, qui sont fixées éventuellement sur la plaque ou sur un support propre.

## Claims

1. A galvanic element, in particular a secondary element, having circulating liquid electrolyte, a plurality of preferably bipolar plastics-bonded carbon-containing electrodes (1) and a plurality of separators (2), the separators (2) and the electrodes (1) at least in the region of their outer edges being connected, e.g., glued essentially directly together to be liquid tight, whereby anode and cathode spaces are formed which for the electrolyte in the anode spaces and cathode spaces respectively have distributor channels (4, 5) which are preferably formed by depressions lying in the region of the edges of the electrodes and/or separators and connected together to conduct liquid, characterized in that the anode spaces and the cathode spaces are connected via openings (8), at least one each for leading in electrolyte and at least one each for leading out electrolyte, which pass through the edges of the electrodes (1) and/or separators (2), the said edges extending essentially transversely to the latter, and through separate, in particular one piece electrolyte-conducting connectors (11), via the openings corresponding with one another and in each case in a manner liquid tight from one another for leading electrolyte respectively into and out of the anode spaces and cathode spaces respectively.

2. A galvanic element as in Claim 1, characterized in that each opening (8) is connected to a respective channel (13) in the connector (11), the channels being preferably led through a heat-exchanger (31) and in each case opening out directly or indirectly into a main channel (14) arranged if necessary in the connector, for leading electrolyte in or out respectively.

3. A galvanic element as in Claim 1 or 2, characterized in that in at least one connector the openings (8) for leading electrolyte into and/or out of the anode space and/or cathode space are connected via a cross-channel (15) in addition to the main electrolyte channel (14).

4. A galvanic element as in Claim 3, characterized in that the cross-channel (15) exhibits a cross-section which varies in area.

5. A galvanic element as in Claim 4, characterized in that the area of cross-section decreases up to the centre of the cross-channel (15) and then increases again.

6. A galvanic element as in Claim 1, 2 or 3, characterized in that the cross-channel (15) in the connector (11) is built up of individual portions (15a, 15b, 15c) between the respective leads into and out of the anode or cathode spaces, of at least partially different lengths with the cross-section preferably remaining constant, in particular with the length increasing up to the middle electrode space.

7. A galvanic element as in Claim 6, characterized in that the individual portions are built up of pieces of tube, hoses or the like.

8. A galvanic element as in Claim 6, characterized in that two parts (18) of the connector (11) exhibit a plane (19) of connection, through which pass the leads in and out and in at least portions (15a, 15b, 15c) of the crosschannel which in one part connect the leads in and/or out respectively together in the plane (19) of connection exhibit recesses approximately semicircular or the like in cross-section.

9. A galvanic element as in one of the Claims 1 to 8, characterized in that the channels (13) in the connector (11) are arranged in rows, in particular in two rows offset.

10. A galvanic element as in one of the Claims 1 to 9, characterized in that the openings (8) exhibit a rectangular cross-section and that the channels (13) in the connector (11) in the region adjoining the openings exhibit a corresponding cross-section, though the channel continues into an approximately circular channel.

11. A galvanic element as in one of the Claims 1 to 10, characterized in that the openings (8) pass through a layer (3) which surrounds the edges of the electrodes and separators.

12. A galvanic element as in Claim 11, characterized in that the layer is formed from the material of the electrodes (1) and/or separators (2) by fusing them.

13. A galvanic element as in Claim 11, characterized in that the layer is formed by sheathing the edges.

14. A galvanic element as in one of the Claims 11, 12 or 13, characterized in that in the layer of a gas discharge channel is provided, which connects the anode or cathode spaces respectively and if necessary is closable.

15. A galvanic element as in one of the Claims 1 to 14, characterized in that the connector and the electrodes and/or separators exhibit at their cooperating areas guide members, in particular tongues (12) and grooves (10).

16. A galvanic element as in one of the Claims 1 to 15, characaterized in that at least one channel (13a) in the connector (11) is divided and exhibits besides the mouth into a channel leading electrolyte in or out and if necessary into a crosschannel (15), a further junction with a closable channel (20).

17. A galvanic element as in Claim 16, characterized in that the channel (13a) opening into the main channel which leads electrolyte in or out respectively, is made partially curved and that the closable channel (20) extends essentially in a straight line with the adjoining channel up to the opening (8).

18. A galvanic element as in Claim 17, characterized in that at least one part of the wall of the curved channel (13a) is built up in the connector by at least one filler (21), the filler or fillers exhibiting if necessary the closable channels (20) and being preferably connected together.

19. A method of production of galvanic elements, in particular secondary elements, which have circulating liquid electrolyte and in which a plurality of electrodes, in particular bipolar electrodes, which are built up from thermoplastic material and in their interior exhibit an electrochemically active substance, in particular plastics-bonded carbon, and separators which are built up from thermoplastic material, are welded together at their edges, characterized in that the electrodes and/or separators are held together and pressed against one another, if necessary by stiffening endplates, and the edges of the electrodes and separators and if necessary of the endplates are fused transversely to their plane extent via a heated metal mirror adjacent to the edges or run into contact with them, and then the melt, if necessary with a plane material brought into contact, preferably fused at the same time by the metal mirror, is solidified, preferably under the action of a cooling medium, after the metal mirror has been run out.

20. A method as in Claim 19, characterized in that the openings which pass through the edges of the electrodes and/or separators, the said edges extending essentially transversely to the latter, are closed before or during the fusion of the edges by fillers, in particular thermally insulating fillers, e.g., pegs acted upon by separating agent, which if necessary are provided on a special work-carrier, or polytetrafluoroethylene fillers or the like, where if necessary a plate divided at the fillers is run in between what is to be fused and the work-carrier.

21. A method as in Claim 19 or 20, characterized in that before fusion tubes or hoses of thermoplastic material are introduced into the openings.

22. A method of production of the electrolyte-conducting connector of the galvanic element as in one of the Claims 1 to 18, for the anode and cathode spaces, where a thermoplastic part having a plurality of preferably cylindrical recesses arranged at intervals from one another or respectively one slit, and tubes or hoses of thermoplastic material are introduced into the part, whereupon the thermoplastic material of the part and of the tubes or hoses is partially fused, preferably via a heated plate, e.g., a metal mirror, and then is made to solidify with a part which is to be connected to it, if necessary a pack of the electrodes and/or separators fused at the same time.

23. A method as in Claim 22, characterized in that before and/or during the fusion and if necessary before solidification of the bores of the tubes or hoses they are filled by fillers, e.g. pegs provided with separating agent, in particular thermally insulating fillers which if necessary are fastened to the plate or to a special carrier.

Fig. 1

Fig. 2

Fig. 3

Fig. 4

Fig. 5

Fig. 6

Fig.7

a.

b.

c.

Fig.8

Fig.9

a.                 b.           c.

Fig.10